# EUROPEAN PATENT SPECIFICATION

(11) **EP 0 435 213 B1**
(45) Date of publication and mention of the grant of the patent: **30.10.1996**
(21) Application number: 90125217.1
(22) Date of filing: 21.12.1990
(51) Int. Cl.: C09D 4/06, C04B 41/62, E01C 7/32

(54) **Composition for coating concrete**
Zusammensetzung zur Beschichtung von Beton
Composition pour le revêtement du béton

(30) Priority: 28.12.1989 IL 92917
(43) Date of publication of application: 03.07.1991
(73) Proprietor: ALDEMA LTD., Ashdod (IL)
(72) Inventor: Margulis, Yuri, Ashdod (IL); Lavy, Avraham, Ramat-Gan (IL)
(74) Representative: Kraus, Walter, Dr.

(56) References cited:
- DE-A- 1 769 792
- DE-A- 2 421 380
- US-A- 4 045 395
- US-A- 4 338 224

## Description

### FIELD OF THE INVENTION :

The invention relates to novel formulations which are applied as protective layer on asphalt road surfaces, on runways of airfields, asphalt surfaces in industrial use, roofs and the like. The protective layers impart to the underlying structure essential impermeability to water penetration, enhanced protection against damage by solar radiation and against attack by a variety of chemicals. The protective layer also affords a considerable protection against oxidation of underlying asphalt, either by itself or as a component of various compositions.

### BACKGROUND OF THE INVENTION :

Asphalt concrete compositions, especially those used under considerable mechanical and environmental stress, do not fulfill quality requirements and require extensive repairs and also periodical replacement. Research in this field concentrates on the optimization of the compositions used, in an endeavor to attain adequate protection againt oxidation and mechanical deterioration. Hitherto a wide variety of additives has been proposed, but still no satisfactory compositions have come into use.

DE-A-1 769 792 relates to a composition for forming a layer or for filling in voids in certain roads and the like, said composition, inter alia, contains 30 to 70 wt.-% of a methacrylic acid methylester, coarse materials as a filler, and no content of any bitumen. According to DE-A 1 769 792 said compositions possess a very short shelf live (about 30 minutes) and are used for road marking at an application rate of considerable thickness. Therefore, DE-A-1 769 792 does not either disclose or suppose the subject-matter of the present invention.

### SUMMARY OF THE INVENTION :

The present invention relates to a composition for application to a concrete asphalt substrate, so as to form an integral protective uppermost layer, comprising:
10 to 20 weight percent of a monomer or a monomer mixture selected from the group methyl methacrylate, styrene and acrylate, and a combination thereof:
15-25 weight percent of bitumen;
50-80 weight percent of a mineral particulate filler;
1-3 weight percent of a carboxylic acid as plastiziser.

It comprises furthermore approximately 0.1-0.8 weight percent of phenol as a UV-protective and formulation stabilizing agent. Preferably said mineral particulate filler is a member selected from the group consisting of gravel of different particle size, sand, inert mineral, pulverized mineral and a combination thereof. The composition preferably further comprises, in combination with the bitumen component, a member selected from the group consisting of petrolatum, paraffin wax, ozocerite and a combination thereof, and preferably contains 1-3 weight percent oleic acid.

Furthermore the invention relates to a concrete surface having improved mechanical strength and increased weathering resistance, comprising:
a bitumen-concrete substrate layer having a thickness of at least 3 cm; and a composition which is applied to said bitumen-concrete substrate, said composition including:
10 to 20 weight percent of a monomer or a monomer mixture selected from the group consisting of methyl methacrylate, styrene, acrylate, and a combination thereof; 15-25 weight percent of bitumen;
50-80 weight percent of a mineral particulate filler; and 1-3 weight percent of a carboxylic acid as plastiziser, said composition being applied to said bitumen-concrete substrate layer at a quantity of from 0.7 kg/m²-2.5 kg/m² so as to form an essentially water-impervious surface layer.
According to one embodiment there is provided a concrete surface having improved mechanical strength and increased weathering resistance wherein said bitumen-concrete substrate layer contains less than 5 percent by weight bitumen or an equivalent thereof and 0.1 to 0.8 weight percent of phenol as a UV-protective and formulation stabilizing agent and said bitumen-concrete substrate layer has a thickness of above 3 cm.

The invention also relates to a process for producing a concrete surface having improved mechanical strength and increased weathering resistance, comprising the step of: applying a composition to a bitumen-concrete substrate, said bitumen-concrete substrate having a thickness of at least 3 cm, at a quantity of from 0.7 kg/m²-2.5 kg/m² so as to form an essentially water-impervious surface layer, said composition including:
10 to 20 weight percent of a monomer or a monomer mixture selected from the group consisting of methyl methacrylate, styrene and acrylate, and a combination thereof:
15-25 weight percent of bitumen;
50-80 weight percent of a mineral particulate filler; and 1-3 weight percent of a carboxylic acid as plastiziser, and wherein said bitumen-concrete substrate layer contains less than 5 percent by weight bitumen or an equivalent thereof and 0.1 to 0.8 weight percent of phenol as a UV-protective and formulation stabilizing agent and where said bitumen-concrete substrate layer has a thickness of 3-5 cm.
There are provided compositions for application as protective layer on asphalt surfaces, concrete-asphalt surfaces and any similar structures based on asphalt or its equivalents. There are also provided means for impregnating the surface layer of such structures, so as to attain a protective layer of a predetermined depth, which enhances mechanical stability, reduces to a large extent oxidation, provides protection against penetration by water, such layer having certain elastic properties. The exposure of bitumen to vapors of the monomer bring about a gradual modification of the properties of the bitumen.

The protective layers remain effective over a wide range of temperatures, from about -50°C to about 80°C,without any appreciable change. The surface layer according to the invention withstands the deleterious effects of UV radiation for prolonged periods of time, reducing aging and erosion. The novel protective layer is of special importance when applied to concrete-asphalt surfaces: roads, runways, roofs, industrial structures and the like. The novel compositions can be applied to a large variety of concrete asphalt or asphalt substrates. The use on such substrates having a predetermined porosity, which will generally be in the 3 to 8 per cent range, is preferred. Generally the order of magnitude of the protective layer is 0.7 kg/m² to 2.5 kg/m² surface, resulting in a certain penetration into the substrate, thus forming a layer with a decreasing content of the important ingredients as a greater depth is reached. Thus there is formed a layer which affords the required protection.

The novel compositions are based on a combination of fine grain minerals with a polymeric substance, if required with monomers which also serve as solvent, polymerization initiators, UV protectors, etc.

According to a preferred embodiment of the invention the compositions contain from 50 to 80 weight-per cent of a fine grain mineral mixture, a polymer, a suitable carboxylic acid serving as plasticizer, an agent like benzoic peroxide dimethyl aniline and as accelerator a substance like naphthacobalt. It is advisable to incorporate a suitable commercially available antioxidant. There may be used minerals like finely ground marble, limestone, granite, dolomite, etc. of predetermined particle size distribution. It is a further object of the invention to provide improved structures, such as roads, runways, roofs, etc., which have improved resistance against mechanical stresses and which also afford protection of the asphalt against aging, the structure of the invention acting as a mechanical buffer system. The noise of wheels moving on such surfaces is decreased by about 10 to 40 per cent.

Such a system comprises a substrate of increased porosity, and a protective layer applied to same. An increased porosity can be attained by a reduced asphalt content of the substrate on which the protective layer is formed, which constitutes an integral structure therewith. Generally bitumen (or asphalt) contents of the substrate of from about 3 to 5 per cent gave good results.

Compositions of the invention contain, by way of example, from 15 to 25 weight-% bitumen, which can be used in different qualities and types;
a fine-grain mineral filler: 55 to 70 weight-%, a suitable monomer or monomer mixture, like methylmethacrylate of the order of 10 to about 20 weight-%; if desired with from 0.03 to 0.1 weight-% of dimethylaniline, 1 to 3 weight-% oleic acid, 0.1 to 0.8 weight-% phenol and added water to adjust the viscosity to a desired value. The use of the additives, such as dimethylaniline is optional. Instead of the above monomer there can be used a variety of other monomers. such as styrene, copolymers or terpolymers, and the like.
The compositions must be adjusted to the specific intended use.
It is clear that there may be used a wide variety of different components which are equivalents of the above.

The invention is illustrated with reference to the following examples, which are by way of illustration only:
According to a preferred technology, the bitumen is heated gradually to about 120 to l60°C,mixed in a high speed mixer with the monomer and the solids and agitated for about 30 minutes to one hour. Typical compositions have a viscosity of about 250 to 350 CST at 25°C.Upon addition of a hardener and catalyst the product can be applied during about 24 hours before hardening. The compositions devoid of hardener and catalyst can be stored in a closed container for up to about one year.

### Example 1:

### Emulsion of Micro-Polymeric Concrete Asphalt for the lmpregnation of Concrete Asphalt, Ground Concrete Constructions and other Surface layers:

| | |
|---|---|
| Bitumen (blown, 75/25) | 16 |
| Ground dolomit, about 250 mesh | 60 |
| Methylmethacrylate monomer | 14 |
| Dimethylaniline | 0.04 |
| Oleic acid | 1.5 |
| Phenol | 0.3 |
| Glycerol | 0.3 |
| Water - up to desired viscosity, about | 20 |

The water is admixed to the mixture after cooling down.

A black liquid is obtained which serves for the formation of a surface layer ; the rate of application is about 1 kg/m². The layer dries in about one hour. A long-lasting protective cover is obtained, which withstands weathering over prolonged periods of time.

### Example 2:

A composition was prepared according to Example 1, but without dimethyaniline and without water. A viscous substance was obtained which can be applied to any surface which is to be impregnated. The rate of application is about 1.5 kg/m². A weather-resistant, and wear-resistant layer is obtained.

### Example 3:

A composition was prepared according to Example 2, but with styrene monomer instead of methyl methacrylate, l7 parts. A similar composition was obtained. Similar properties were obtained.

### Example 4:

A composition was prepared according to Example 3, but with the addition of 0.5 weight-% benzoyl peroxide and 0.3 weight-% cobalt naphthenate. Curing took place in one hour. A highly resistant protective layer was obtained.

### Example 5:

A composition was prepared according to Example 2, but with a 50/50 monomer mixture of methylmethacrylate and styrene. Curing took place in less than one hour. A highly resistant protective layer is obtained when applied to porous concrete asphalt or similar substrates.

### Example 6 :

### Cold Composition for the Formation of a Road Layer, of an Airfield Runway, Parking Lot, or the like.

The following composition is applied as layer of about 3 to 5 cm thickness to a suitable substrate, which can also be a deteriorated road surface or the like, and after polymerization for about 12 hours there is obtained a long-lasting surface which has excellent mechanical properties, which is very little permeable to water and which withstands oxidation due to sunlight over prolonged periods of time. Parts are parts by weight :

| | |
|---|---|
| Dolomite chips - 25 mm | 10 |
| Coarse dolomite gravel - 12 mm | 20 |
| Fine dolomite gravel - 9 mm | 20 |
| Crushed sand (2 to 4 mm) | 38 |
| Micro-Polymeric Concrete Asphalt according to Example 3 | 12 |

### Example 7:

A composition was prepared according to Example 3, but with the following instead of the mineral components:

| | |
|---|---|
| Fine sand | 36 |
| Finely ground mineral | 56 |

When applied to a suitable substrate, after curing there is obtained a highly water-impervious surface layer.

Various compositions of the invention were subjected to accelerated aging tests according to standard conditions, according to ASTM G 53. The tests were carried out for 1000 to 1300 hours with concrete substrates of varying porosity. At the end of the test a water pressure of 1000 mm was applied, for 14 days. At the end of the test period no water penetration had taken place.

The compositions of the invention can be applied to conventional asphalt road surfaces. These have generally a bitumen content of about 5 to 7 per cent. According to the invention it has been found that a novel system of substrate/protective layer gives improved results as regards resistance to vibrations, shocks, stresses by pressure. Such a system comprises an asphalt concrete, and similar composition layer of increased porosity, which contains only from about 3 to 5 weight-per cent bitumen, and which has a thickness which is generally of not less than 5 cm thickness, to which a composition of the invention, such as one of the foregoing examples is applied. The actual protective layer comprises the upper one or 2 millimeters, although a deeper penetration takes place into crevices, etc. Such a water-impervious surface layer with the underlying structure which forms a mechanical buffer system of improved stress resistance, provides long lasting roads, runways, roofs, etc. The upper layer also affords chemical protection against aging of the asphalt and against its oxidation, thereby drastically reducing maintenance costs compared with conventional roads, runways, and the like.

The coating also reduces wheel noise on roads coated with such a composition.

The following results were obtained with a coating composition according to Example No.3 :
35 mm thick asphalt concrete cast sheets were obtained, of the type used in roads and runways.
In addition to the above a modofied bitumen was examined.
The above sheets were coated with a composition of Example 3, at approximately 1kg/m².
The aim of the test was to determine the influence of the coating on water penetration and the changes of this property after accelerated UV ageing.
Water penetration was tested on the following types of samples:
(1) Without coating
(2) Coated with Example 3, unaged;
(3) Coated with Example 3, after exposure to 500 hours UV;
(4) Sample after 1300 hours UV radiation.

### Conditions of UV radiation

Q-U.V. Panel in accordance with ASTM G-53. Cycles of 8 hours radiation at 60°C followed by 4 hours 100% humidity at 50°C.

### Test Procedure

On the sheet samples an 80mm diameter funnel was placed, to which a 1000 mm high burette was fixed. The contact of the funnel to the sheet was sealed by epoxy and the setup was filled with water. The drop of the water level in the burette was recorded from time to time during 14 days.

The results are expressed in ml of water seepage.

| No.of days | Sample without Coating | Sample coated with Example No.3 - unaged | Sample after 500 hrs. U.V. - aged |
|---|---|---|---|
| 1 | Water passed | -0.1 | -0.2 |
| 2. | Immediately | -0.2 | -0.3 |
| 3 | Through the asphalt | -0.2 | -0.35 |
| 6. | Through the asphalt | -0.2 | -0.4 |
| 7. | Concrete sheet | -0.3 | - 04 |
| 8 | | -0.4 | - 0.45 |
| 9 | | -0.4 | - 0.5 |
| 10 | | -0.45 | - 0.55 |
| 14 | | -0.7 | - 0.7 |

| | | |
|---|---|---|
| Sample after 1300 hours exposure to UV Radiation | | |
| Number of Days: | 0 | 0 |
| | 4 | -0.25 |
| | 5 | -0.25 |
| | 6 | -0.35 |
| | 7 | -0.40 |
| | 12 | -0.60 |
| | 13 | -0.70 |
| | 14 | -0.70 |

### Conclusion :

Water penetration through the original sample and samples after 500 hours and after 1300 hours UV exposure is practically identical, i.e. UV radiation has no effect on water penetration.

At the rate of application generally used, in the order of from about 1 kg/m² to about 3 kg/m², the composition penetrates into the top layer of the concrete asphalt surface and impregnates this layer. Practically no actual layer is formed on top of the original one, and such a layer does not exceed about 0.7 to 1 mm. Concrete asphalt surfaces of roads and the like have a certain porosity, and this facilitates the penetration of the compositions of the invention into the uppermost part of such existing surface.

## Claims

1. A composition for application to a concrete asphalt substrate, so as to form an integral protective uppermost layer, comprising:
10 to 20 weight percent of a monomer or a monomer mixture selected from the group consisting of methyl methacrylate, styrene and acrylate,
and a combination thereof:
15-25 weight percent of bitumen;
50-80 weight percent of a mineral particulate filler;
1-3 weight percent of a carboxylic acid as plastiziser.

2. The composition according to claim 1, characterized in that it comprises furthermore 0.1-0.8 weight percent of phenol as a UV-protective and formulation stabilizing agent.

3. The composition according to claim 1, wherein said mineral particulate filler is a member selected from the group consisting of gravel of different particle size, sand, inert mineral, pulverized mineral and a combination thereof.

4. The composition according to claim 1, further comprising, in combination with the bitumen component, a member selected from the group consisting of petrolatum, paraffin wax, ozocerite and a combination thereof.

5. The composition according to claim 1, containing 1-3 weight percent oleic acid.

6. A concrete surface having improved mechanical strength and increased weathering resistance, comprising:
a bitumen-concrete substrate layer having a thickness of at least 3 cm; and a composition which is applied to said bitumen-concrete substrate, said composition including:
10 to 20 weight percent of a monomer or a monomer mixture selected from the group consisting of methyl methacrylate, styrene, acrylate, and a combination thereof; 15-25 weight percent of bitumen;
50-80 weight percent of a mineral particulate filler; and 1-3 weight percent of a carboxylic acid as plastiziser, said composition being applied to said bitumen-concrete substrate layer at a quantity of from 0.7 kg/m²-2.5 kg/m² so as to form an essentially water-impervious surface layer.

7. A concrete surface having improved mechanical strength and increased weathering resistance according to claim 6, wherein said bitumen-concrete substrate layer contains less than 5 percent by weight bitumen or an equivalent thereof and 0.1 to 0.8 weight percent of phenol as a UV-protective and formulation stabilizing agent.

8. A concrete surface having improved mechanical strength and increased weathering resistance according to claim 6, wherein said bitumen-concrete substrate layer has a thickness of above 3 cm.

9. A process for producing a concrete surface having improved mechanical strength and increased weathering resistance, comprising the step of:
applying a composition to a bitumen-concrete substrate, said bitumen-concrete substrate having a thickness of at least 3 cm, at a quantity of from 0.7 kg/m²-2.5 kg/m² so as to form an essentially water-impervious surface layer, said composition including:
10 to 20 weight percent of a monomer or a monomer mixture selected from the group consisting of methyl methacrylate, styrene and acrylate, and a combination thereof:
15-25 weight percent of bitumen;
50-80 weight percent of a mineral particulate filler; and 1-3 weight percent of a carboxylic acid as plastiziser.

10. The process for producing a concrete surface according to claim 9, wherein said bitumen-concrete substrate layer contains less than 5 percent by weight bitumen or an equivalent thereof and 0.1 to 0.8 weight percent of phenol as a UV-protective and formulation stabilizing agent.

11. The process for producing a concrete surface according to claim 9, wherein said bitumen-concrete substrate layer has a thickness of 3-5 cm.

## Patentansprüche

1. Masse zum Aufbringen auf ein Beton-Asphalt-Substrat, um eine integrale oberste Schutzschicht zu formen, enthaltend:
10 bis 20 Gew.-% eines Monomeren oder eines Monomergemisches, ausgewählt aus der Gruppe, bestehend aus Methylmethacrylat, Styrol und Acrylat, und einer Kombination davon,
15 bis 25 Gew.-% Bitumen;
50 bis 80 Gew.-% eines mineralischen teilchenförmigen Füllstoffs;
1 bis 3 Gew.-% einer Carbonsäure als Weichmacher.

2. Masse nach Anspruch 1, dadurch **gekennzeichnet**, daß sie weiterhin 0,1 bis 0,8 Gew.-% Phenol als UV-Schutzmittel und die Zusammensetzung stabilisierendes Mittel umfaßt.

3. Masse nach Anspruch 1, dadurch **gekennzeichnet**, daß der mineralische Füllstoff ein Material, ausgewählt aus der Gruppe, bestehend aus Kies unterschiedlicher Partikelgröße, Sand, inerten Mineralien, pulverisierten Mineralien und einer Kombination davon ist.

4. Masse nach Anspruch 1, dadurch **gekennzeichnet**, daß sie in Kombination mit der Bitumenkomponente weiterhin ein Material der Gruppe, bestehend aus Petrolatum, Paraffinwachs, Ozocerit und einer Kombination davon, enthält.

5. Masse nach Anspruch 1, dadurch **gekennzeichnet**, daß sie 1 bis 3 Gew.-% Ölsäure enthält.

6. Betonoberfläche mit verbesserter mechanischer Festigkeit und erhöhter Wetterbeständigkeit, umfassend:
eine Bitumen-Beton-Substratschicht mit einer Dicke von mindestens 3 cm; und
eine Masse, die auf dieses Bitumen-Beton-Substrat aufgebracht ist, wobei die Masse enthält:
10 bis 20 Gew.-% eines Monomeren oder eines Monomergemisches, ausgewählt aus der Gruppe, bestehend aus Methylmethacrylat, Styrol, Acrylat und einer Kombination davon,
15 bis 25 Gew.-% Bitumen;
50 bis 80 Gew.-% eines mineralischen teilchenförmigen Füllstoffs; und
1 bis 3 Gew.-% einer Carbonsäure als Weichmacher;
wobei diese Masse auf die Bitumen-Beton-Substratschicht in einer Menge von 0,7 kg/m² bis 2,5 kg/m² aufgebracht ist, um eine praktisch wasserundurchlässige Oberflächenschicht zu bilden.

7. Betonoberfläche mit verbesserter mechanischer Festigkeit und erhöhter Wetterbeständigkeit nach Anspruch 6, dadurch **gekennzeichnet**, daß die Bitumen-Beton-Substratschicht weniger als 5 Gew.-% Bitumen oder eines Äquivalents davon und 0,1 bis 0,8 Gew.-% Phenol als UV-Schutzmittel und die Zusammensetzung stabilisierendes Mittel enthält.

8. Betonoberfläche mit verbesserter mechanischer Festigkeit und erhöhter Wetterbeständigkeit nach Anspruch 6, dadurch **gekennzeichnet**, daß die Bitumen-Beton-Substratschicht eine Dicke von mehr als 3 cm hat.

9. Verfahren zur Herstellung einer Betonoberfläche mit verbesserter mechanischer Festigkeit und erhöhter Wetterbeständigkeit, umfassend die folgende Stufe:
Aufbringen einer Masse auf ein Bitumen-Beton-Substrat, wobei das Bitumen-Beton-Substrat eine Dicke von mindestens 3 cm hat, in einer Menge von 0,7 kg/m² bis 2,5 kg/m², um eine praktisch wasserundurchlässige Oberflächenschicht zu bilden, wobei die Masse enthält:
10 bis 20 Gew.-% eines Monomeren oder einer Monomerenmischung, ausgewählt aus der Gruppe, bestehend aus Methylmethacrylat, Styrol und Acrylat und einer Kombination davon,
15 bis 25 Gew.-% Bitumen;
50 bis 80 Gew.-% eines mineralischen teilchenförmigen Füllstoffs; und
1 bis 3 Gew.-% einer Carbonsäure als Weichmacher.

10. Verfahren zur Herstellung einer Betonoberfläche nach Anspruch 9, dadurch **gekennzeichnet**, daß die Bitumen-Beton-Substratschicht weniger als 5 Gew.-% Bitumen oder ein Äquivalent davon und 0,1 bis 0,8 Gew.-% Phenol als UV-Schutzmittel und die Zusammensetzung stabilisierendes Mittel enthält.

11. Verfahren zur Herstellung einer Betonoberfläche nach Anspruch 9, dadurch **gekennzeichnet**, daß die Bitumen-Beton-Substratschicht eine Dicke von 3 bis 5 cm hat.

## Revendications

1. Composition pour revêtir un substrat de béton à l'asphalte afin de former une couche protectrice intégrale superficielle, ladite composition comprenant :
- 10 à 20 % en poids d'un monomère ou mélange monomère choisi parmi l'ensemble constitué par les méthacrylate de méthyle, styrène et acrylate et leurs mélanges ;
- 15 à 20 % en poids de bitume,
- 50 à 80 % en poids de charge minérale particulaire ;
- 1 à 3 % en poids d'acide carboxylique en tant que plastifiant.

2. Composition suivant la revendication 1, caractérisée en ce qu'elle comprend en outre 0,1 à 0,8 % en poids de phénol en tant qu'agent protecteur vis-à-vis des UV et stabilisant de formulation.

3. Composition suivant la revendication 1, dans laquelle ladite charge minérale particulaire est un élément choisi parmi l'ensemble constitué par les graviers de différentes tailles, sable, minéral inerte, minéral pulvérulent et leurs mélanges.

4. Composition suivant la revendication 1, comprenant de plus, en combinaison avec le composant bitume, un élément choisi parmi l'ensemble constitué par la vaseline, la cire de paraffine, l'ozocérite et un de leurs mélanges.

5. Composition suivant la revendication 1, comprenant 1 à 3 % en poids d'acide oléïque.

6. Surface en ciment ayant une résistance mécanique améliorée et une résistance à l'érosion augmentée comprenant :
- une couche de substrat bitume-béton ayant une épaisseur d'au moins 3 cm ; et
- une composition appliquée audit substrat bitume-béton, ladite composition incluant :
- 10 à 20 % en poids d'un monomère ou mélange monomère choisi parmi l'ensemble constitué par les méthacrylate de méthyle, styrène et acrylate et leurs mélanges ;
- 15 à 20 % en poids de bitume,
- 50 à 80 % en poids de charge minérale particulaire ;
- 1 à 3 % en poids d'un acide carboxylique en tant que plastifiant, ladite composition étant appliquée sur ladite couche de substrat bitume-béton selon une quantité de 0,7 kg/m² à 2,5 kg/m², de façon à former une surface essentiellement imperméable à l'eau.

7. Surface de ciment ayant une résistance mécanique améliorée et une résistance à l'érosion suivant la revendication 6, dans laquelle la couche de substrat bitum-béton contient moins de 5 % en poids de bitume ou un de ses équivalents et 0,1 à 0,8 % en poids de phénol en tant qu'agent protecteur vis-à-vis des UV et stabilisant de formulation.

8. Surface de ciment ayant une résistance mécanique améliorée et une résistance à l'érosion augmentée suivant la revendication 6, dans laquelle la couche de substrat bitume-béton a une épaisseur de plus de 3 cm.

9. Procédé pour produire une surface en béton ayant une résistance mécanique améliorée et une résistance à l'érosion augmentée, comprenant l'étape consistant à appliquer une composition sur un substrat bitume-béton, ledit substrat bitume-béton ayant une épaisseur d'au moins 3 cm, selon une quantité de 0,7 kg/m² à 2,5 kg/m², pour former une surface essentiellement imperméable à l'eau, ladite composition incluant :
- 10 à 20 % en poids d'un monomère ou mélange monomère choisi parmi l'ensemble constitué par les méthacrylate de méthyle, styrène et acrylate et leurs mélanges ;
- 15 à 20 % en poids de bitume,
- 50 à 80 % en poids de charge minérale particulaire ;
- 1 à 3 % en poids d'un acide carboxylique en tant que plastifiant.

10. Procédé pour la production d'une surface en béton suivant la revendication 9, dans lequel ladite couche de substrat bitume-béton contient au moins 5 % en poids de bitume ou de l'un de ses équivalents et 0,1 à 0,8 % en poids de phénol en tant qu'agent protecteur vis-à-vis et stabilisant de formulation.

11. Procédé pour la production d'une surface en béton suivant la revendication 9, dans lequel la couche de substrat bitume-béton a une épaisseur de 3 à 5 cm.
